# EUROPÄISCHE PATENTSCHRIFT

(11) **EP 4 378 073 B1**
(45) Veröffentlichungstag und Bekanntmachung des Hinweises auf die Patenterteilung: **31.12.2025**
(21) Anmeldenummer: 22751043.5
(22) Anmeldetag: 12.07.2022
(51) Int. Cl.: H02P 25/028, H02P 25/22, H02P 5/74, H02P 29/024, B64D 27/02, B64D 35/00, B60L 50/15, B60L 3/00, B60L 50/61, B60L 58/21, B64D 27/34, B64D 31/18, H02P 27/06, H02J 5/00

(54) **ELEKTRISCHES ANTRIEBSSYSTEM**
ELECTRIC DRIVE SYSTEM
SYSTÈME D'ENTRAÎNEMENT ÉLECTRIQUE

(30) Priorität: 27.07.2021 DE 102021208075
(43) Veröffentlichungstag der Anmeldung: 05.06.2024
(73) Patentinhaber: Rolls-Royce Deutschland Ltd & Co KG, 15827 Blankenfelde-Mahlow (DE)
(72) Erfinder: SONS, Markus, 15827 Blankenfelde-Mahlow (DE); WEIDAUER, Jens, 15827 Blankenfelde-Mahlow (DE); SCHILDT, Philipp, 15827 Blankenfelde-Mahlow (DE)
(86) Internationale Anmeldenummer: PCT/EP2022/069492
(87) Internationale Veröffentlichungsnummer: WO 2023/006414

(56) Entgegenhaltungen:
- EP-A1- 3 620 382
- US-A1- 2020 017 197
- US-A1- 2020 290 742
- US-A1- 2021 221 526
- US-B1- 11 065 979

## Beschreibung

Die vorliegende Offenbarung bezieht sich insbesondere auf ein elektrisches Antriebssystem, ein Fahrzeug mit einem solchen elektrischen Antriebssystem und ein Verfahren zum Betreiben eines elektrischen Antriebssystems.

Elektrische Antriebssysteme gewinnen immer stärker an Bedeutung und immer mehr Fahrzeugtypen werden mit elektrischen Antriebssystemen versehen, beispielsweise Fahrräder, Automobile und Flugzeuge. Die jeweiligen elektrischen Antriebssysteme wandeln dabei elektrische Energie in Bewegungsenergie des Fahrzeugs. Im Beispiel von Flugzeugen treibt hierzu der Elektromotor z.B. einen Propeller an. Die elektrische Energie wird z.B. mittels einer Batterie mitgeführt, über eine Verbrennungsmaschine mit einem Generator bereitgestellt oder auf andere Weise erzeugt, beispielsweise mittels Solarzellen.

Bei elektrischen Antriebssystemen im Allgemeinen, und insbesondere bei Luftfahrzeugen, wird regelmäßig eine besonders hohe Ausfallsicherheit angestrebt, welche unter anderem durch redundante Baugruppen erzielt wird. Hierdurch kann erreicht werden, dass ein einzelner Fehler nicht zu einem Ausfall des gesamten elektrischen Antriebssystems führt, indem die von dem Fehler betroffene Komponente oder Baugruppe elektrisch und/oder mechanisch vom übrigen elektrischen Antriebssystem getrennt wird, wobei das übrige elektrische Antriebssystem weiterhin funktionsfähig bleibt.

Hierzu werden in der Praxis Elektromotoren mit mehreren voneinander elektrisch isolierten Lanes eingesetzt. Ein solcher Elektromotor kann auch als Multi-Lane-Elektromotor bezeichnet werden. Der Elektromotor umfasst damit mehrere Teilmotoren, deren Drahtwicklungen voneinander galvanisch getrennt sind. Alle Teilmotoren des Elektromotors treiben denselben Rotor an. Entsteht beispielsweise in der Drahtwicklung von einer der Lanes ein Kurzschluss, kann diese elektrisch von einer Versorgung mit Antriebsenergie getrennt werden, während die übrigen Lanes weiter Vorschub erzeugen.

Derartige Multi-Lane-Konzepte bringen jedoch oftmals auch eine erhöhte Komplexität des entsprechenden elektrischen Antriebssystems mit sich.

Die US 11,065,979 B1 beschreibt ein Überwachungssystem eines elektrischen Flugzeugs oder Hybridflugzeugs. Darin wird vorgeschlagen, einen Motor über einen ersten Satz von Wicklungen des Motors mittels eines Batteriepakets anzutreiben und dabei mit einem als Generator fungierenden zweiten Satz von Wicklungen des Motors Energie zu gewinnen.

Die EP 3 620 382 A1 betrifft den Betrieb eines hybriden Flugzeugantriebssystems. Darin ist beschrieben, dass zwei Motoren jeweils zwei Statoren aufweisen können, wobei der eine Stator jeweils über einen Generator betrieben wird, während der andere Stator über einen jeweiligen Wechselrichter mit Energie aus einer Batterie versorgt wird.

Weitere hybridelektrische Antriebssysteme sind in der US 2021/221526 A1 und der US 2020/290742 A1 beschrieben. Die US 2020/017197 A1 beschreibt eine Federstellung für Propellerblätter.

Aufgabe der vorliegenden Erfindung ist es, eine hohe Leistungsfähigkeit bei einem möglichst einfachen Aufbau eines elektrischen Antriebssystems zu ermöglichen.

Gelöst wird diese Aufgabe durch das elektrische Antriebssystem und das Verfahren der unabhängigen Ansprüche.

Hierdurch wird das Multi-Lane-Konzept des Elektromotors dazu eingesetzt, elektrische Energie zwischen den elektrisch voneinander isolierten Lanes (und ggf. jeweils daran angeschlossenen, ebenfalls voneinander elektrisch isolierten Energiequellen) auszutauschen. Das ermöglicht eine deutliche Verbesserung der Leistungsfähigkeit bei gleichzeitig erhöhter Ausfallsicherheit und durch den Doppelnutzen des Multi-Lane-Elektromotors einem einfachen Aufbau und geringem Gewicht. Zudem werden vielfältige Anwendungen ermöglicht, die hierin im Einzelnen ausgeführt werden. Eine Lane kann z.B. auch als Strompfadanordnung bezeichnet werden. Bei einem Dreiphasenwechselstrom beispielsweise umfasst jede Lane elektrische Leiter für alle drei Phasen. Diese Leiter sind elektrisch isoliert von den Leitern der übrigen Lanes des Elektromotors.

Der Rotor ist z.B. mit einer Strömungsmaschine gekoppelt, etwa einem Propeller, einem Fan oder einem Verdichter, insbesondere eines Luftfahrzeugs. Bei Luftfahrzeugen kommen die oben beschriebenen Vorteile ganz besonders zum Tragen.

In einer Ausgestaltung weist die Strömungsmaschine Rotorblätter mit einstellbaren Anstellwinkeln auf, wobei das Steuerungssystem dazu eingerichtet sein kann, bei dem gleichzeitigen Motor- und Generatorbetrieb die Anstellwinkel der Rotorblätter derart einzustellen, dass die Strömungsmaschine keinen Vortrieb erzeugt. So kann z.B. im Stillstand des Luftfahrzeugs Energie zwischen Lanes übertragen werden.

Jede der Lanes umfasst ein elektrisches Wicklungssystem, oder besteht daraus. Das Wicklungssystem umfasst zumindest eine Drahtwicklung. Die Drahtwicklung(en) wird/werden z.B. (jeweils) aus einem mehrfach, z.B. um einen Zahn, gewundenen Draht gebildet.

Jede der Versorgungseinheiten umfasst beispielsweise einen Wechselrichter und/oder ist als Wechselrichter betreibbar. Ein an die jeweilige Versorgungseinheit angelegter Gleichstrom ist somit in einen Wechselstrom für den Elektromotor wandelbar. Insbesondere können die Versorgungseinheiten jeweils dazu ausgebildet sein, einen Gleichstrom in einen Dreiphasenwechselstrom zu wandeln und diesen an die entsprechende Lane bereitzustellen. Jede Lane ist also z.B. dazu ausgebildet, mit einem Dreiphasenwechselstrom betrieben zu werden, um den Rotor in eine Drehung zu versetzen.

Ferner kann zumindest eine (oder können z.B. alle) der Versorgungseinheiten einen Gleichrichter umfassen und/oder als Gleichrichter betreibbar sein. Somit kann die Versorgungseinheit mit einem Wechselstrom der jeweiligen Lane beaufschlagt werden, um daraus einen Gleichstrom zu erzeugen, der beispielsweise an einen Energiespeicher bereitgestellt werden kann, um elektrische Energie zu speichern. Die Versorgungseinheit(en) ist/sind z.B. jeweils dazu ausgebildet, einen Dreiphasenwechselstrom von der entsprechenden Lane in einen Gleichstrom zu wandeln. Somit ist es mit dem elektrischen Antriebssystem möglich, Energie über den Elektromotor zwischen elektrisch voneinander isolierten (und voneinander unabhängigen) DC-Lanes zu übertragen, ohne dass hierfür zusätzliche Komponenten wie etwa DC/DC-Konverter oder zusätzliche Schalter notwendig sind. Eine oder jede der Versorgungseinheiten kann/können sowohl als Wechselrichter als auch als Gleichrichter betreibbar sein. Beispielsweise steuert das Steuerungssystem die Versorgungseinheit(en) wahlweise derart an, dass diese entweder als Wechselrichter oder als Gleichtrichter wirkt/wirken. Der Wechselrichter und der Gleichrichter in der Versorgungseinheit (oder den Versorgungseinheiten) sind z.B. mit derselben Hardware realisiert, z.B. mit denselben Schaltern, Transistoren oder dergleichen.

Das elektrische Antriebssystem umfasst ferner einen mit zumindest einer der Lanes elektrisch wirkverbundenen Generator. Der Generator ist mechanisch mit einer Verbrennungsmaschine gekoppelt. Ein solcher Generator kann z.B. zur Verlängerung der Reichweite eingesetzt werden. Durch die Ausgestaltung des elektrischen Antriebssystems ist es z.B. möglich, nur einen Teil der Lanes mit dem Generator zu verbinden, wobei vom Generator bereitgestellte Energie über den gleichzeitigen Motor- und Generatorbetrieb an die anderen Lanes transferierbar ist. Hierdurch kann also auf einige Kabelverbindungen verzichtet werden, wodurch ein reduziertes Gewicht und ein geringerer Verkabelungsaufwand ermöglicht werden.

Der Generator kann mehrere voneinander elektrisch getrennte Lanes umfassen, in denen durch Rotation eines Rotors des Generators eine elektrische Spannung induziert wird. Jede Lane des Generators ist z.B. mit nur genau einer Lane des Elektromotors elektrisch verbunden. Das ermöglicht eine besonders hohe Ausfallsicherheit.

Optional umfasst das elektrische Antriebssystem einen weiteren, zweiten Elektromotor, ebenfalls mit einem Rotor und mehreren voneinander elektrisch getrennten Lanes, die unabhängig voneinander mit elektrischem Strom beaufschlagbar sind, um den Rotor des weiteren Elektromotors anzutreiben. So kann ausreichend Schub auch für größere Fahrzeuge erzeugt werden.

In einer Ausgestaltung ist zumindest eine Lane des Elektromotors mit zumindest einer Lane des Generators elektrisch wirkverbunden, während zumindest eine Lane des weiteren Elektromotors mit zumindest einer anderen Lane des Generators elektrisch wirkverbunden ist. So können beide Elektromotoren durch den Generator mit Strom versorgt werden.

Das elektrische Antriebssystem umfasst ferner z.B. einen an zum indest eine der Lanes elektrisch angeschlossenen Energiespeicher. Damit kann z.B. auf fossile Energieträger zum Teil oder vollständig verzichtet werden.

Optional umfasst das elektrische Antriebssystem mehrere, jeweils an zumindest (oder genau) eine der Lanes elektrisch angeschlossene Energiespeicher. Dabei kann vorgesehen sein, dass elektrische Energie von einem der Energiespeicher über eine im Motorbetrieb betriebene Lane und eine weitere, im Generatorbetrieb betriebene Lane zu einem anderen Energiespeicher übertragbar ist.

Gemäß einem Aspekt wird ein Fahrzeug, z.B. ein Luftfahrzeug, insbesondere ein Flugzeug, ein Drehflügler oder ein unbemanntes Luftfahrzeug, ein Landfahrzeug, insbesondere ein Bus oder ein LKW, oder ein Wasserfahrzeug, bereitgestellt. Das Fahrzeug umfasst das elektrische Antriebssystem nach einer beliebigen, hierin beschriebenen Ausgestaltung, insbesondere zum Antrieb einer Schub erzeugenden Vorrichtung, z.B. eines Propellers. Die Vorteile des hierin beschriebenen elektrischen Antriebssystems kommen bei einem Fahrzeug, insbesondere bei einem Luftfahrzeug, besonders zum Tragen.

Bei dem Fahrzeug kann zumindest ein an zumindest eine der Lanes elektrisch angeschlossener Energiespeicher auswechselbar am Fahrzeug montiert sein. Hierzu umfasst das Fahrzeug z.B. einen entsprechenden Steckverbinder. Alternativ oder zusätzlich kann zumindest ein an zumindest eine der Lanes elektrisch angeschlossener Energiespeicher fest am Fahrzeug montiert sein. Beispielsweise dienen die fest montierten Energiespeicher als Reserve, und der auswechselbare Energiespeicher dient als hauptsächliche Energiequelle. In einem nicht voll ausgelasteten Betriebszustand, bei einem Flugzeug z.B. ein Segelflug, ein Sinkflug, eine Rollfahrt etc., kann Energie zwischen den Energiespeichern über den Elektromotor ausgetauscht werden. Hierdurch kann z.B. der fest verbaute Energiespeicher mit Restenergie aus dem auswechselbaren Energiespeicher vollgeladen werden, bevor letzterer ausgewechselt wird.

Das Fahrzeug kann als Luftfahrzeug mit einem Rumpf und Flügeln ausgebildet sein, wobei z.B. zumindest ein an zumindest eine der Lanes elektrisch angeschlossener Energiespeicher am oder im Rumpf (insbesondere auswechselbar) montiert ist und zumindest ein an zumindest eine der Lanes elektrisch angeschlossener Energiespeicher an oder in einem der Flügel (insbesondere fest) montiert ist.

Gemäß Anspruch 14 wird ein Verfahren zum Betreiben eines elektrischen Antriebssystems angegeben, insbesondere eines Antriebssystems nach einer beliebigen, hierin beschriebenen Ausgestaltung.

Es werden nun beispielhaft Ausführungsformen mit Bezug auf die Figuren beschrieben, in den Figuren zeigen:
- Figur 1: eine schematische Schnittdarstellung eines elektrischen Antriebssystems mit einem permanenterregten, dreiphasigen Elektromotor als Innenläufer;
- Figur 2: ein schematisches Blockschaltbild eines elektrischen Antriebssystems mit zwei Elektromotoren, einem davon separaten Generator und mehreren Energiespeichern;
- Figur 3: ein schematisches Blockschaltbild eines elektrischen Antriebssystems mit zwei Elektromotoren und mehreren Energiespeichern, von denen einige in einem elektrischen Energiespeichersystem zusammengefasst sind, das nicht Teil der Erfindung ist;
- Figur 4: ein schematisches Blockschaltbild eines elektrischen Antriebssystems mit zwei Elektromotoren, die an ein gemeinsames Energiespeichersystem angeschlossen sind, das nicht Teil der Erfindung ist; und
- Figur 5: eine schematische Darstellung eines Luftfahrzeugs in Form eines Flugzeugs.

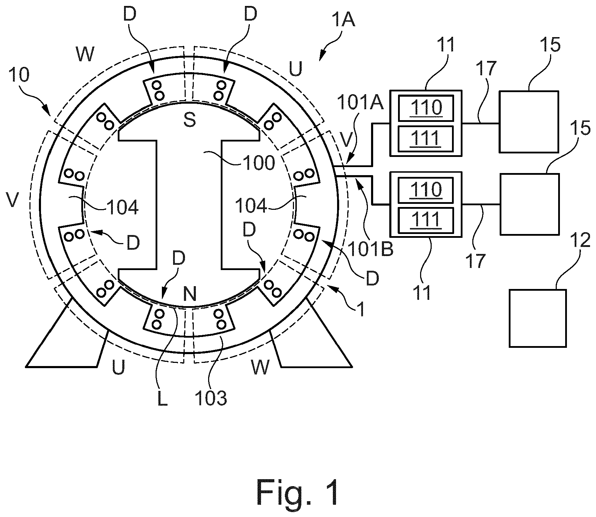

Figur 1 zeigt in einer schematischen Schnittdarstellung ein elektrisches Antriebssystem 1A mit einem Elektromotor 10 in Form einer permanenterregten Synchronmaschine. Aus Figur 1 ist ersichtlich, dass der Elektromotor 10 als Innenläufer ausgebildet ist. Der Elektromotor 10 umfasst eine Baugruppe in Form eines Stators 103, der eine nicht bezeichnete Öffnung, insbesondere Durchgangsöffnung, aufweist, in der eine weitere Baugruppe in Form eines Rotors 100 drehbar gelagert angeordnet ist.

Der Stator 103 umfasst einen Körper in Form eines Blechpakets, an welchem Zähne festgelegt sind, die auch als Ständerzähne bezeichnet werden können. Die Ständerzähne sind auf einen Luftspalt L zwischen dem Körper des Stators 103 und dem Rotor 100 ausgerichtet. Die Ständerzähne stehen radial vom Körper ab, vorliegend radial nach innen.

Der Elektromotor 10 umfasst ferner mehrere (hier zwei) voneinander elektrisch isolierte Lanes 101A, 101B, die voneinander unabhängig mit elektrischem Strom versorgt werden können, um den Rotor 100 anzutreiben. Jede Lane 101A, 101B bildet einen Teilmotor oder Sub-Motor aus, der unabhängig von den anderen betrieben werden kann.

Jede der Lanes 101A, 101B weist hierzu ein Wicklungssystem auf, das mehrere Drahtwicklungen D umfasst. Die Drahtwicklungen D sind jeweils um die Ständerzähne herumgewickelt. Die Wicklungssysteme sind vorliegend für einen dreiphasigen Betrieb ausgebildet, das heißt, an eine dreiphasige Wechselspannung mit Phasen U, V, W angeschlossen. Im bestimmungsgemäßen Betrieb des elektrischen Antriebssystems 1A können die Wicklungssysteme entsprechend mit der Wechselspannung beaufschlagt werden. Die Wicklungssysteme aller Lanes 101A, 101B sind am selben Stator 103 fixiert.

Die Lanes 101A, 101B sind dabei galvanisch voneinander getrennt. Der Rotor 100 ist durch Beaufschlagung von nur einer beliebigen der Lanes 101A, 101B mit der Wechselspannung in eine Drehung relativ zum Stator 103 versetzbar, sowie durch eine Beaufschlagung aller Lanes 101A, 101B mit der Wechselspannung.

Der Rotor 100 ist hier lediglich beispielhaft als Schenkelpolläufer ausgebildet, der zur Bereitstellung des magnetischen Flusses Permanentmagnete umfasst. In der vorliegenden Ausgestaltung ist vorgesehen, dass der Rotor 100 genau einen magnetischen Nordpol N und einen magnetischen Südpol S aufweist. Bei alternativen Ausgestaltungen können auch mehr magnetische Pole in Umfangsrichtung quer zu einer Drehachse des Rotors 100 (relativ zum Stator 103) alternierend vorgesehen sein.

Der Rotor 100 ist drehbar gelagert. Durch die dreiphasige Wechselspannung, deren Phasen U, V, W um jeweils 120° phasenverschoben sind, wird durch eine oder beide Lanes 101A, 101B ein magnetisches Drehfeld im bestimmungsgemäßen Betrieb erzeugt, welches mit dem durch den Rotor 100 bereitgestellten permanenterregten Magnetfeld zusammenwirkt, sodass in einem Motorbetrieb der Lane(s) 101A, 101B eine entsprechende Drehbewegung des Rotors 100 gegenüber dem Stator 103 herbeigeführt werden kann. Vorliegend ist vorgesehen, dass der Elektromotor 10 als Antriebsmotor für eine Luftschraube eines Luftfahrzeugs dient, wie weiter unten noch näher erläutert werden wird. In Figur 1 sind schematisch die Abschnitte der Wicklungssysteme dargestellt, die den jeweiligen Phasen U, V, W zugeordnet sind.

Ferner sind die Lanes 101A, 101B in einem Generatorbetrieb betreibbar, in dem von der jeweiligen Lane 101A, 101B elektrischer Strom bereitgestellt wird, um mechanische Energie des Rotors 100 in elektrische Energie zu wandeln.

Die beiden Lanes 101A, 101B des Elektromotors 10 sind an jeweils eine von zwei, jeweils dreiphasig ausgebildeten, voneinander unabhängigen Versorgungseinheiten 11 angeschlossen.

Die Versorgungseinheiten 11 sind zwischen einem Wechselrichterbetrieb und einem Gleichrichterbetrieb umschaltbar (oder zumindest gilt das für eine der Versorgungseinheiten 11). Im Wechselrichterbetrieb erzeugt die jeweilige Versorgungseinheit 11 aus einer Gleichspannung die Wechselspannung für die entsprechende Lane 101A, 101B. Im Gleichrichterbetrieb erzeugt die jeweilige Versorgungseinheit 11 aus einer durch eine Drehung des Rotors 100 der in der entsprechenden Lane 101A, 101B erzeugten Wechselspannung eine Gleichspannung. Im Wechselrichterbetrieb sind in einer möglichen Ausgestaltung (zumindest zum Teil) dieselben elektrischen und/oder elektronischen Bauteile der jeweiligen Versorgungseinheit 11 aktiv wie im Gleichrichterbetrieb.

Ein Steuerungssystem 12 des elektrischen Antriebssystems 1A ist operativ mit den Versorgungseinheiten 11 verbunden und schaltet diese selektiv in den Wechselrichterbetrieb oder in den Gleichrichterbetrieb. Das Steuerungssystem 12 ist hierdurch dazu eingerichtet, eine der Lanes 101A, 101B im Motorbetrieb zu betreiben, indem die Lane 101A, 101B über die entsprechende Versorgungseinheit 11 mit elektrischem Wechselstrom beaufschlagt wird, um elektrische Energie in Bewegungsenergie des Rotors 100 zu wandeln, und (z.B. gleichzeitig dazu) zumindest eine andere der Lanes 101A, 101B im Generatorbetrieb zu betreiben, indem von der Lane 101A, 101B ein elektrischer Wechselstrom an die entsprechende Versorgungseinheit 11 und durch diese Gleichstrom bereitgestellt wird, um Bewegungsenergie des Rotors 100 in elektrische Energie zu wandeln.

Die Versorgungseinheiten 11 stellen die elektrische Wechselspannung mit den drei Phasen U, V, W bereit. Die Versorgungseinheiten 11 beziehen die für den bestimmungsgemäßen Betrieb erforderliche elektrische Energie aus jeweils einer an eine der beiden Versorgungseinheiten 11 über eine elektrische Verbindung 17 angeschlossenen Energiequelle, hier jeweils in Form eines Energiespeichers 15. Die einzelnen elektrischen Verbindungen 17 können auch als Gleichspannungs-Lanes oder DC-Lanes (oder jeweils als DC-Bus) bezeichnet werden. Die Energiespeicher 15 (allgemein die Energiequellen) sind elektrisch voneinander getrennt und unabhängig voneinander betreibbar. In der vorliegenden Ausgestaltung handelt es sich bei jeder der Energiequellen um eine Gleichspannungsquelle, die elektrische Energie beispielsweise aus einer wiederaufladbaren Batterie bereitstellt. Alternativ oder ergänzend können Brennstoffzellen und/oder dergleichen vorgesehen sein.

Zur Erzeugung der Wechselspannung aus der Gleichspannung umfassen die Versorgungseinheiten 11 jeweils einen Wechselrichter 110. Die Wechselrichter 110 weisen für die Bereitstellung der Phasen U, V, W z.B. jeweils eine Vollbrückenschaltung auf. Insbesondere können die Wechselrichter 110 jeweils mindestens eine Reihenschaltung aus zwei elektronischen Schaltelementen (z.B. Transistoren) aufweisen, die an die jeweilige Gleichspannung der Energiequelle angeschlossen ist. Die elektronischen Schaltelemente werden mittels einer Steuereinheit des jeweiligen Wechselrichters 110 in einem Taktbetrieb betrieben, der zum Beispiel Taktmuster nach Art eines PWM-Signals bereitstellt.

Ferner umfasst jede der Versorgungseinheiten 11 einen Gleichrichter 111. Mittels des Gleichrichters 111 kann die jeweilige Versorgungseinheit 11 einen durch eine Rotation des Rotors 100 in der angeschlossenen Lane 101A, 101B induzierten Wechselstrom gleichrichten und als Gleichstrom an den entsprechenden Energiespeicher 15 bereitstellen.

Im Wechselrichterbetrieb sind der Wechselrichter 110 aktiviert und der Gleichrichter 111 deaktiviert. Im Gleichrichterbetrieb sind der Wechselrichter deaktiviert und der Gleichrichter aktiviert.

Wird gleichzeitig eine der Lanes 101A, 101B im Motorbetrieb betrieben und die andere im Generatorbetrieb, ist somit eine Energieübertragung zwischen den galvanisch voneinander getrennten DC-Lanes und insbesondere den Energiespeichern 15 möglich. Wird der Pitch von am Rotor 100 montierten und/oder dadurch rotierbaren Rotorblätter hierbei so eingestellt, dass kein Vortrieb erzeugt wird, kann das sogar z.B. im Stillstand des Luftfahrzeugs erfolgen.

Das Steuerungssystem 12 kann eine zentrale Steuerungseinheit umfassen und/oder mehrere verteilte Steuerungseinheiten, z.B. jeweils eine Steuerungseinheit in jeder der Versorgungseinheiten 11.

Die Versorgungseinheiten 11 werden hier der Einfachheit halber zum elektrischen Antriebssystem 1A gezählt, können aber auch als Teil der jeweils daran angeschlossenen Lane 101A, 101B angesehen werden.

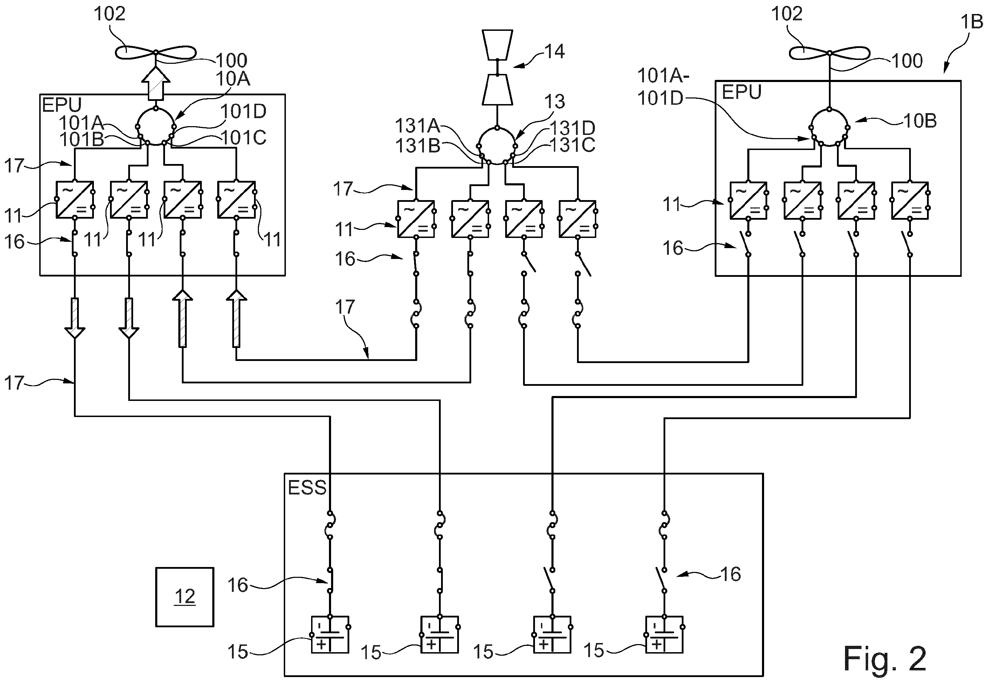

Figur 2 zeigt ein elektrisches Antriebssystem 1B für ein Fahrzeug, insbesondere ein Flugzeug, mit zwei Elektromotoren 10A, 10B. Jeder der Elektromotoren 10A, 10B treibt über einen Rotor 100 eine Strömungsmaschine 102 in Form eines Propellers an.

Die Elektromotoren 10A, 10B umfassen jeweils mehrere, konkret vier separate Lanes 101A-101D. Der jeweilige Propeller ist mittels jeder der Lanes 101A-101D antreibbar, wird also in eine Drehung versetzt, wenn zumindest eine der Lanes 101A-101D mit Strom versorgt wird. Die Lanes eines jeden Elektromotors 10A, 10B sind elektrisch voneinander isoliert.

Jede der Lanes 101A-101D der Elektromotoren 10A, 10B ist über eine entsprechende elektrische Verbindung 17 an eine Versorgungseinheit 11 angeschlossen. Die Versorgungseinheiten 11 sind z.B. so ausgebildet, wie im Zusammenhang mit Figur 1 erläutert. Die Versorgungseinheiten 11 erlauben es, dass gleichzeitig zumindest eine der Lanes 101A-101D in einem Motorbetrieb betrieben wird, in dem die Lane 101A-101D über die entsprechende Versorgungseinheit 11 mit elektrischem Strom beaufschlagt wird, um elektrische Energie in Bewegungsenergie des Rotors 100 zu wandeln, und zumindest eine der Lanes 101A-101D in einem Generatorbetrieb betrieben wird, in dem mittels der Lane 101A-101D über die entsprechende Versorgungseinheit 11 elektrischer Strom bereitgestellt wird, um Bewegungsenergie des Rotors 100 in elektrische Energie zu wandeln.

Jeder der Elektromotoren 10A, 10B bildet zusammen mit den daran angeschlossenen Versorgungseinheiten 11 eine elektrische Antriebseinheit EPU, vorliegend für die jeweilige Strömungsmaschine 102.

Das elektrische Antriebssystem 1B umfasst ferner eine Verbrennungsmaschine 14, z.B. in Form eines Hilfstriebwerks (APU) mit einem Kompressor und einer Turbine. Die Verbrennungsmaschine 14 treibt einen Generator 13 an. Der Generator 13 umfasst mehrere, hier vier, Lanes 131A-131D. Jede der Lanes 131A-131D ist an (nur) genau eine jeweilige Versorgungseinheit 11 über eine entsprechende elektrische Verbindung 17 elektrisch angeschlossen und steht über diese Versorgungseinheit 11 mit (nur) genau einer Lane 101A-101D des einen oder des anderen Elektromotors 10A, 10B in elektrischer Wirkverbindung.

Ferner umfasst das elektrische Antriebssystem 1B ein elektrisches Energiespeichersystem ESS. Das elektrische Energiespeichersystem ESS umfasst mehrere Energiespeicher 15. Die einzelnen Energiespeicher 15 des elektrischen Energiespeichersystems ESS sind elektrisch voneinander isoliert. Die Energiespeicher 15 sind vorliegend jeweils in Form einer wiederaufladbaren Batterie ausgebildet.

Jeder der Energiespeicher 15 ist an (nur) genau eine Versorgungseinheit 11 über eine elektrische Verbindung 17 angeschlossen und steht über diese Versorgungseinheit 11 mit (nur) genau einer Lane 101A-101D des einen oder des anderen Elektromotors 10A, 10B in elektrischer Wirkverbindung.

Konkret stehen mehrere, nämlich genau zwei, Lanes 101A, 101B von jedem der beiden Elektromotoren 10A, 10B (über die jeweiligen Versorgungseinheiten 11) in elektrischer Wirkverbindung mit jeweils einem der mehreren, nämlich genau vier, Energiespeicher 15. Die übrigen, konkret ebenfalls jeweils genau zwei, Lanes 101C, 101D von jedem der beiden Elektromotoren 10A, 10B stehen (über die jeweiligen Versorgungseinheiten 11) in elektrischer Wirkverbindung mit jeweils einem der mehreren, nämlich genau vier, Lanes 131A-131D des Generators 13. Allgemeiner formuliert steht mindestens eine der Lanes 101A, 101B von einem Elektromotor 10A, 10B des elektrischen Antriebssystems 1B in elektrischer Wirkverbindung mit dem Generator 13 und zumindest eine andere der Lanes 101C, 101D des Elektromotors 10A, 10B steht in elektrischer Wirkverbindung mit dem elektrischen Energiespeichersystem ESS. Hierdurch können Einschränkungen im Betrieb des Generators 13 durch veränderliche Batteriespannungen vermieden werden.

Zumindest die Lanes 101A, 101B, die in elektrischer Wirkverbindung mit einem der Energiespeicher 15 stehen, sind wahlweise im Motorbetrieb oder im Generatorbetrieb betreibbar. Hierzu sind z.B. die jeweiligen Versorgungseinheiten 11 umschaltbar, beispielsweise zwischen einem Wechselrichterbetrieb und einem Gleichrichterbetrieb, z.B. wie oben beschrieben.

Optionale Schalter 16 in den elektrischen Verbindungen 17 lassen sich öffnen und schließen, um eine der angeschlossenen Komponenten abzukoppeln, z.B. bei einem Fehler der Komponente, oder während eines Nichtgebrauchs.

In Figur 2 ist anhand von Pfeilen beispielhaft ein Nutzungsszenario veranschaulicht, bei dem nur einer der beiden Propeller in eine Drehung versetzt wird, optional mit einem Anstellwinkel, bei dem durch den Propeller kein Schub erzeugt wird. Die Verbrennungsmaschine 14 treibt den Generator 13 an, sodass an dessen Lanes 131A-131D Spannungen induziert werden. Durch diese werden über die Versorgungseinheiten 11 und die geschlossenen Schalter 16 Spannungen in den Lanes 101C, 101D des einen Elektromotors 10A angelegt, die einen Stromfluss zur Folge haben, welcher ein magnetisches Wechselfeld erzeugt, das wiederum den Rotor 100 in eine Drehung versetzt. Hierdurch werden in den übrigen beiden Lanes 101A, 101B des Elektromotors 10A Spannungen induziert, die über die entsprechenden Versorgungseinheiten 11 einen Ladestrom für die jeweiligen Energiespeicher 15 bewirken. Somit kann der Generator 13 trotz galvanischer Trennung von den Energiespeichern 15 über den Elektromotor 10A die Energiespeicher 15 aufladen.

Optional wird der andere Elektromotor 10B analog betrieben, indem das Steuerungssystem 12 die Schalter 16 und die Versorgungseinheiten 11 entsprechend ansteuert.

Das Steuerungssystem 12 bestimmt die Stellungen der Schalten 16 und die Einstellung der Versorgungseinheiten 11 in den Generatorbetrieb oder in den Motorbetrieb.

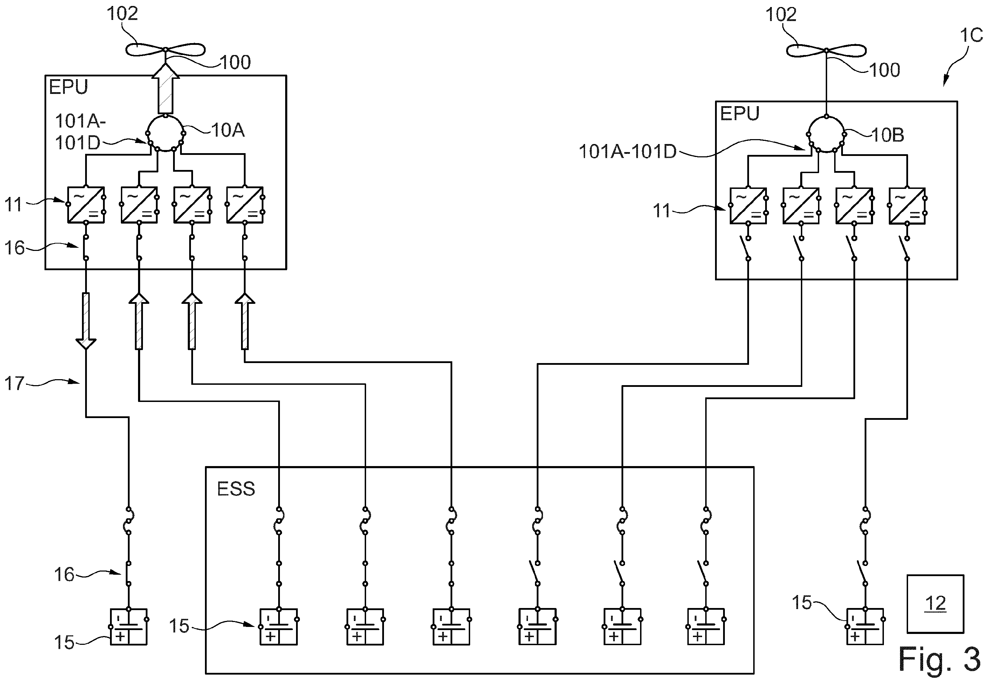

Figur 3 zeigt ein elektrisches Antriebssystem 1C für ein Fahrzeug, insbesondere ein Flugzeug, mit zwei Elektromotoren 10A, 10B, die entsprechend Figur 2 aufgebaut, jedoch anders angeschlossen sind.

Das elektrische Antriebssystem 1C gemäß Figur 3 umfasst keine Verbrennungsmaschine mit einem Generator. Sämtliche Lanes 101A-101D der Elektromotoren 10A, 10B sind über die jeweiligen Versorgungseinheiten 11 (ausschließlich) an Energiespeicher 15 angeschlossen. Die Energiespeicher 15 sind vorliegend jeweils in Form einer wiederaufladbaren Batterie ausgebildet.

Für jede Lane 101A-101D von jedem der Elektromotoren 10A, 10B ist genau ein Energiespeicher 15 vorgesehen, bei hier beispielhaft insgesamt acht Lanes 101A-101D also acht Energiespeicher 15.

Im gezeigten Beispiel sind einige der Energiespeicher 15 zu einem elektrischen Energiespeichersystem ESS zusammengefasst. Dieses elektrische Energiespeichersystem ESS ist (z.B. über entsprechende Steckverbinder) zerstörungsfrei lösbar und austauschbar am Fahrzeug eingebaut. Das elektrische Energiespeichersystem ESS dient als primäre Energiequelle. Weist das elektrische Energiespeichersystem ESS einen niedrigen Ladestand auf, ist es schnell gegen ein vollgeladenes elektrisches Energiespeichersystem ESS austauschbar und muss somit nicht am Fahrzeug geladen werden, was typischerweise wesentlich zeitaufwändiger wäre. Die Energiespeicher 15 des elektrischen Energiespeichersystems ESS sind z.B. in einem gemeinsamen Gehäuse oder an einem gemeinsamen Tragrahmen montiert.

Weitere (hier zwei) Energiespeicher 15 sind separat vom elektrischen Energiespeichersystem ESS angeordnet und z.B. fest am Fahrzeug befestigt. Diese Energiespeicher 15 dienen z.B. zum Vorhalten einer Energiereserve und/oder zur Bereitstellung von zusätzlicher Energie bei einer maximalen Leistungsaufnahme, etwa beim Start des als Flugzeug ausgebildeten Fahrzeugs. Insbesondere ist es durch die Energieübertragung über die Elektromotoren 10A, 10B auch möglich, derartige Reserve-Energiespeicher 15 vorzusehen, ohne dass zu deren Anbindung zusätzliche DC/DC-Konverter oder dergleichen nötig sind.

Die separaten Energiespeicher 15 sind, wie anhand der Pfeile veranschaulicht, über den entsprechenden Elektromotor 10A, 10B aufladbar, indem an die jeweils (drei) anderen Lanes 101B-101D Energie aus dem elektrischen Energiespeichersystem ESS bereitgestellt wird. Das kann z.B. im Gleitflug oder auf dem Rollfeld erfolgen, bei einem Automobil oder Omnibus z.B. bei einer nicht voll ausgelasteten Fahrt.

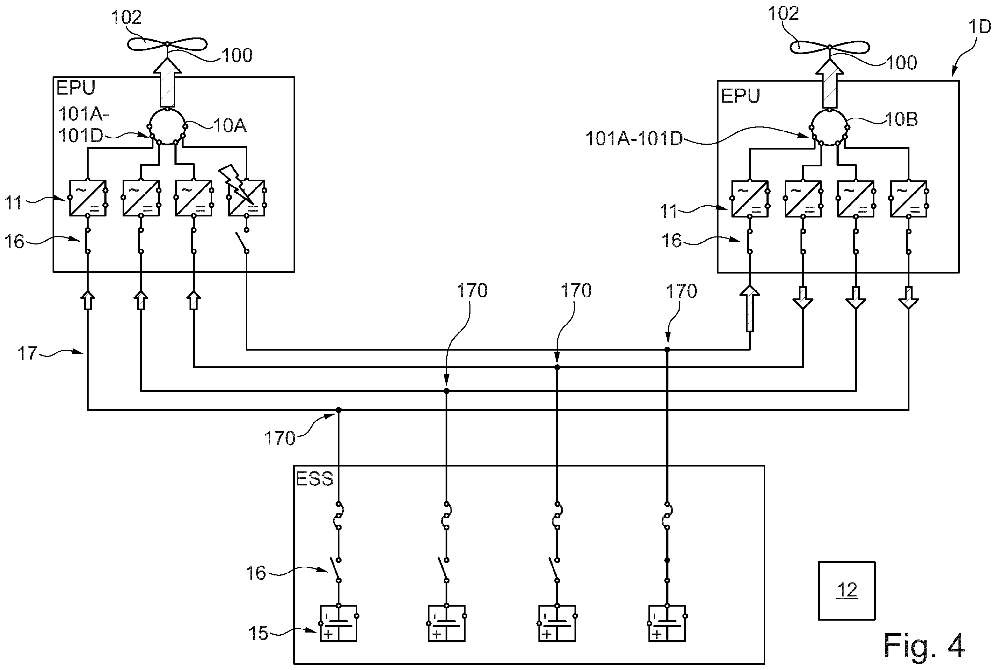

Figur 4 zeigt ein elektrisches Antriebssystem 1D für ein Fahrzeug, insbesondere ein Flugzeug, mit zwei Elektromotoren 10A, 10B, die entsprechend Figur 2 und 3 aufgebaut, jedoch anders angeschlossen sind.

Das elektrische Antriebssystem 1D gemäß Figur 4 umfasst in diesem Beispiel keine Verbrennungsmaschine und keinen separaten Generator. Sämtliche Lanes 101A-101D der Elektromotoren 10A, 10B sind über die jeweiligen Versorgungseinheiten 11 (ausschließlich) an Energiespeicher 15 angeschlossen. Die Energiespeicher 15 sind wiederum beispielhaft jeweils in Form einer wiederaufladbaren Batterie ausgebildet.

Für jeweils eine Lane 101A-101D des einen Elektromotors 10A und eine Lane 101A-101D des anderen Elektromotors 10B ist genau ein gemeinsamer Energiespeicher 15 vorgesehen, bei hier beispielhaft insgesamt acht Lanes 101A-101D also vier Energiespeicher 15. Die elektrische Verbindung 17 von jedem der Energiespeicher 15 zu den Versorgungseinheiten 11 der beiden zugehörigen Lanes 101A-101D weist somit eine Abzweigung 170 auf.

Diese Schaltung ermöglicht es, bei einem Fehler an einer der Lanes 101A-101D, diese Lane 101A-101D abzuschalten und die von dieser Lane 101A-101D nicht abgerufene Energie über den anderen Elektromotor 10A, 10B so zu verteilen, dass beide Elektromotoren 10A, 10B denselben Schub erzeugen und/oder sämtliche Energiespeicher 15 gleichermaßen entladen werden.

Im gezeigten Beispiel ist ein Fehler in der Versorgungseinheit 11 der vierten Lane 101D des einen Elektromotors 10A aufgetreten. Das Steuerungssystem 12 hat diese Versorgungseinheit 11 über den zugeordneten Schalter 16 von dem entsprechenden Energiespeicher 15 getrennt. Die übrigen Lanes 101A-101C des Elektromotors 10A werden weiter betrieben. Die über die entsprechende Verzweigung 170 mit der fehlerhaften Versorgungseinheit 11 verbundene Lane 101A des anderen Elektromotors 10B verbraucht durch den Fehler nun allein die Energie des zugeordneten Energiespeichers 15. Ohne eine Übertragung von Energie an die anderen Lanes 101A-101D würde dieser Energiespeicher 15 also nur halb so schnell geleert wie die übrigen Energiespeicher 15 und es verbliebe ungenutzte Energie, was zudem die Reichweite verringern würde.

Durch die beschriebene Ausgestaltung des elektrischen Antriebssystems 1D ist es möglich, die verbliebene Lane 101A dieses Energiespeichers 15 mit einer größeren Stromstärke zu betreiben und/oder eine oder mehrere der anderen Lanes 101B-101D dieses Elektromotors 10B zumindest zeitweise im Generatorbetrieb zu betreiben. Die dabei eingespeiste Energie kann an die verbleibenden Lanes 101A-101C des Elektromotors 10A bereitgestellt werden. Optional werden hierbei die übrigen Energiespeicher 15 zumindest zeitweise durch Öffnen der zugeordneten Schalter 16 entkoppelt. Alternativ werden die Schalter 16 der Energiespeicher 15 geschlossen und z.B. die Schalter 16 der verbleibenden Lanes 101A-101C des Elektromotors 10A geöffnet. So können dann die übrigen Energiespeicher 15 geladen werden.

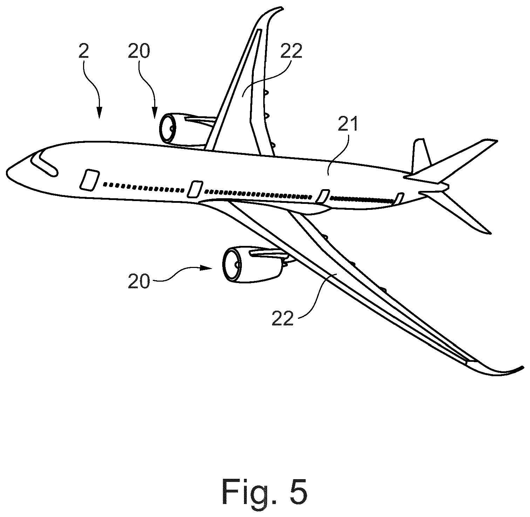

Figur 5 zeigt ein Fahrzeug, konkret ein Luftfahrzeug 2 in Form eines elektrisch angetriebenen Flugzeugs. Das Luftfahrzeug 2 umfasst einen Rumpf 21 mit daran angebrachten Flügeln 22. An jedem der Flügel 22 ist ein Triebwerk 20 abgebracht. Das Luftfahrzeug 2 umfasst ferner eines der hierin beschriebenen elektrischen Antriebssysteme 1A-1D, beispielsweise das elektrische Antriebssystem 1C gemäß Figur 3. Dabei ist das elektrische Energiespeichersystem ESS auswechselbar im Rumpf 21 angeordnet, während weitere Energiespeicher 15 des elektrischen Antriebssystems 1C fest in den Flügeln montiert sind. Die Triebwerke 20 umfassen jeweils einen der Elektromotoren 10A, 10B, wobei die Strömungsmaschinen 102 hier jeweils als Fan ausgebildet sind, sodass die Elektromotoren 10A, 10B des elektrischen Antriebssystems 1C Schub erzeugen können, um das Luftfahrzeug 2 anzutreiben.

### Bezugszeichenliste

- 1A-1D: elektrisches Antriebssystem
- 10; 10A, 10B: Elektromotor
- 100: Rotor
- 101A-101D: Lane
- 102: Strömungsmaschine
- 103: Stator
- 104: Ständerzahn
- 11: Versorgungseinheit
- 110: Wechselrichter
- 111: Gleichrichter
- 12: Steuerungssystem
- 13: Generator
- 14: Verbrennungsmaschine
- 15: Energiespeicher
- 16: Schalter
- 17: elektrische Verbindung
- 170: Abzweigung
- 2: Luftfahrzeug
- 20: Triebwerk
- 21: Rumpf
- 22: Flügel
- D: Drahtwicklung
- EPU: elektrische Antriebseinheit
- ESS: elektrisches Energiespeichersystem
- L: Luftspalt
- N: Nordpol
- S: Südpol
- U, V, W: Phase

## Patentansprüche

1. Elektrisches Antriebssystem (1A-1D), umfassend:
- einen Elektromotor (10; 10A, 10B) mit einem Rotor (100) und mehreren voneinander elektrisch getrennten Lanes (101A-101D), die unabhängig voneinander mit elektrischem Strom beaufschlagbar sind, um den Rotor (100) anzutreiben, wobei jede der Lanes (101A-101D) ein Wicklungssystem mit zumindest einer Drahtwicklung (D) umfasst;
- jeweils eine Versorgungseinheit (11) für jede der Lanes (101A-101D); und
- ein Steuerungssystem (12), das dazu eingerichtet ist, gleichzeitig zumindest eine der Lanes (101A-101D) in einem Motorbetrieb zu betreiben, in dem die Lane (101A-101D) über die entsprechende Versorgungseinheit (11) mit elektrischem Strom beaufschlagt wird, um elektrische Energie in Bewegungsenergie des Rotors (100) zu wandeln, und zumindest eine der Lanes (101A-101D) in einem Generatorbetrieb zu betreiben, in dem mittels der Lane (101A-101D) über die entsprechende Versorgungseinheit (11) elektrischer Strom bereitgestellt wird;
**gekennzeichnet durch**
einen mit zumindest einer der Lanes (101A-101D) über eine weitere Versorgungseinheit (11) elektrisch wirkverbundenen Generator (13), der mechanisch mit einer Verbrennungsmaschine (14) gekoppelt ist, wobei die weitere Versorgungseinheit (11) einen Gleichrichter (111) umfasst.

2. Elektrisches Antriebssystem (1A-1D) nach Anspruch 1, wobei der Rotor (100) mit einer Strömungsmaschine (102) gekoppelt ist, insbesondere einem Propeller, einem Fan oder einem Verdichter.

3. Elektrisches Antriebssystem (1A-1D) nach Anspruch 2, wobei die Strömungsmaschine (102) Rotorblätter mit einstellbaren Anstellwinkeln aufweist, wobei das Steuerungssystem (12) dazu eingerichtet ist, bei einem gleichzeitigen Motor- und Generatorbetrieb die Anstellwinkel der Rotorblätter derart einzustellen, dass die Strömungsmaschine (102) keinen Vortrieb erzeugt.

4. Elektrisches Antriebssystem (1A-1D) nach einem der vorhergehenden Ansprüche, wobei jede Versorgungseinheit (11) einen Wechselrichter (110) umfasst und/oder als Wechselrichter betreibbar ist, wobei die Versorgungseinheiten (11) jeweils dazu ausgebildet sind, einen Gleichstrom in einen Dreiphasenwechselstrom zu wandeln und an die entsprechende Lane (101A-101D) bereitzustellen.

5. Elektrisches Antriebssystem (1A-1D) nach einem der vorhergehenden Ansprüche, wobei eine oder jede der Versorgungseinheiten (11) einen Gleichrichter (111) umfasst und/oder als Gleichrichter betreibbar ist/sind, wobei die eine oder jede der Versorgungseinheiten (11) jeweils dazu ausgebildet ist/sind, einen Dreiphasenwechselstrom von der entsprechenden Lane (101A-101D) in einen Gleichstrom zu wandeln.

6. Elektrisches Antriebssystem (1A-1D) nach Anspruch 1, wobei der Generator (13) mehrere voneinander elektrisch getrennte Lanes (141A-141D) umfasst.

7. Elektrisches Antriebssystem (1A-1D) nach einem der vorhergehenden Ansprüche, ferner umfassend einen weiteren Elektromotor (10B), mit einem Rotor (100) und mehreren voneinander elektrisch getrennten Lanes (101A-101D), die voneinander unabhängig mit elektrischem Strom beaufschlagbar sind, um den Rotor (100) anzutreiben.

8. Elektrisches Antriebssystem (1A-1D) nach Anspruch 6 und nach Anspruch 7, wobei zumindest eine Lane (101C, 101D) des Elektromotors (10A) elektrisch mit zumindest einer Lane (131A, 131B) des Generators (13) wirkverbunden ist und zumindest eine Lane (101C, 101D) des weiteren Elektromotors (10B) elektrisch mit zumindest einer weiteren Lane (131C, 131D) des Generators (13) wirkverbunden ist.

9. Elektrisches Antriebssystem (1A-1D) nach einem der vorhergehenden Ansprüche, ferner umfassend einen an zumindest eine der Lanes (101A-101D) elektrisch angeschlossenen Energiespeicher (15).

10. Elektrisches Antriebssystem (1A-1D) nach einem der vorhergehenden Ansprüche, ferner umfassend mehrere, jeweils an zumindest eine der Lanes (101A-101D) elektrisch angeschlossene Energiespeicher (15), wobei elektrische Energie von einem der Energiespeicher (15) über eine im Motorbetrieb betriebene Lane (101A-101D) und eine im Generatorbetrieb betriebene Lane (101A-101D) zu einem anderen Energiespeicher (15) übertragbar ist.

11. Fahrzeug, insbesondere Luftfahrzeug (2), umfassend das elektrische Antriebssystem (1A-1D) nach einem der vorherigen Ansprüche.

12. Fahrzeug nach Anspruch 11, wobei zumindest ein an zumindest eine der Lanes (101A-101D) elektrisch angeschlossener Energiespeicher (15) über Steckverbinder auswechselbar am Fahrzeug montiert ist und zumindest ein an zumindest eine der Lanes (101A-101D) elektrisch angeschlossener Energiespeicher (15) fest am Fahrzeug montiert ist.

13. Fahrzeug nach Anspruch 11 oder 12, wobei das Fahrzeug als Luftfahrzeug (2) mit einem Rumpf (21) und Flügeln (22) ausgebildet ist und zumindest ein an zumindest eine der Lanes (101A-101D) elektrisch angeschlossener Energiespeicher (15) am oder im Rumpf (21) montiert ist und zumindest ein an zumindest eine der Lanes (101A-101D) elektrisch angeschlossener Energiespeicher (15) an oder in einem der Flügel (22) montiert ist.

14. Verfahren zum Betreiben eines elektrischen Antriebssystems (1A-1D), insbesondere nach einem der Ansprüche 1-10, umfassend einen Elektromotor (10; 10A, 10B) mit einem Rotor (100) und mehreren voneinander elektrisch getrennten Lanes (101A-101D), die unabhängig voneinander mit elektrischem Strom beaufschlagbar sind, um den Rotor (100) anzutreiben, wobei jede der Lanes (101A-101D) ein Wicklungssystem mit zumindest einer Drahtwicklung (D) umfasst, und jeweils eine Versorgungseinheit (11) für jede Lane (101A-101D) des mindestens einen Elektromotors (10), wobei gleichzeitig zumindest eine der Lanes (101A-101D) in einem Motorbetrieb betrieben wird, in dem die Lane (101A-101D) über die entsprechende Versorgungseinheit (11) mit elektrischem Strom beaufschlagt wird, um elektrische Energie in Bewegungsenergie des Rotors (100) zu wandeln, und zumindest eine der Lanes (101A-101D) in einem Generatorbetrieb betrieben wird, in dem von der Lane (101A-101D) über die entsprechende Versorgungseinheit (11) elektrischer Strom bereitgestellt wird, **dadurch gekennzeichnet, dass** ein mit zumindest einer der Lanes (101A-101D) über eine weitere Versorgungseinheit (11) elektrisch wirkverbundener Generator (13) mechanisch mit einer Verbrennungsmaschine (14) gekoppelt ist, wobei die weitere Versorgungseinheit (11) als Gleichrichter betrieben wird.

## Claims

1. Electric propulsion system (1A-1D) comprising:
- an electric motor (10; 10A, 10B) having a rotor (100) and a plurality of lanes (101A-101D) which are electrically separated from one another and which can be supplied with electrical current independently of one another in order to drive the rotor (100),wherein each of the lanes (101A-101D) comprises a winding system with at least one wire winding (D);
- a respective supply unit (11) for each of the lanes (101A-101D); and
- a control system (12) that is configured to simultaneously operate at least one of the lanes (101A-101D) in a motor mode, in which electrical current is applied to the lane (101A-101D) via the corresponding supply unit (11) in order to convert electrical energy into kinetic energy of the rotor (100), and to operate at least one of the lanes (101A-101D) in a generator mode, in which electrical current is supplied via the corresponding supply unit (11) via the lane (101A-101D);
**characterized in that**
a generator (13) which is functionally electrically connected to at least one of the lanes (101A-101D) via a further supply unit (11) and which is mechanically coupled to an internal combustion engine (14), wherein the further supply unit (11) comprises a rectifier (111).

2. Electric propulsion system (1A-1D) according to claim 1, wherein the rotor (100) is coupled to a turbomachine (102), in particular a propeller, a fan or a compressor.

3. Electric propulsion system (1A-1D) according to claim 2, wherein the turbomachine (102) has rotor blades with adjustable angles, wherein the control system (12) is configured to adjust the angles of the rotor blades in a simultaneous motor and generator mode such that the turbomachine (102) does not generate propulsion.

4. Electric propulsion system (1A-1D) according to one of the preceding claims, wherein each supply unit (11) comprises an inverter (110) and/or is operable as an inverter, wherein the supply units (11) are each designed to convert a direct current into a three-phase alternating current and to supply it to the corresponding lane (101A-101D).

5. Electric propulsion system (1A-1D) according to one of the preceding claims, wherein one or each of the supply units (11) comprises a rectifier (111) and/or can be operated as a rectifier, wherein one or each of the supply units (11) is/are respectively designed to convert a three-phase alternating current from the corresponding lane (101A- 101D) into a direct current.

6. Electric propulsion system (1A-1D) according to claim 1, wherein the generator (13) comprises a plurality of electrically separated lanes (141A-141D).

7. Electric propulsion system (1A-1D) according to one of the preceding claims, further comprising a further electric motor (10B) having a rotor (100) and a plurality of lanes (101A-101D) which are electrically separated from one another and which can be supplied with electrical current independently of one another in order to drive the rotor (100).

8. Electric propulsion system (1A-1D) according to claim 6 and according to claim 7, wherein at least one lane (101C, 101D) of the electric motor (10A) is functionally electrically connected to at least one lane (131A, 131B) of the generator (13) and at least one lane (101C, 101D) of the further electric motor (10B) is functionally electrically connected to at least one further lane (131C, 131D) of the generator (13).

9. Electric propulsion system (1A-1D) according to one of the preceding claims, further comprising an energy store (15) electrically connected to at least one of the lanes (101A-101D).

10. Electric propulsion system (1A-1D) according to one of the preceding claims, further comprising a plurality of energy stores (15), each electrically connected to at least one of the lanes (101A-101D), wherein electrical energy can be transferred from one of the energy stores (15) to another energy store (15) via a lane (101A-101D) operated in motor mode and a lane (101A-101D) operated in generator mode.

11. Vehicle, in particular aircraft (2), comprising the electric propulsion system (1A-1D) according to one of the preceding claims.

12. Vehicle according to claim 11, wherein at least one energy store (15) electrically connected to at least one of the lanes (101A-101D) is replaceably mounted on the vehicle via plug connectors, and at least one energy store (15) electrically connected to at least one of the lanes (101A-101D) is fixedly mounted on the vehicle.

13. Vehicle according to claim 11 or 12, wherein the vehicle is designed as an aircraft (2) with a fuselage (21) and wings (22), and at least one energy store (15) electrically connected to at least one of the lanes (101A-101D) is mounted on or in the fuselage (21), and at least one energy store (15) electrically connected to at least one of the lanes (101A-101D) is mounted on or in one of the wings (22).

14. Method for operating an electric propulsion system (1A-1D), in particular according to one of claims 1-10, comprising an electric motor (10; 10A, 10B) with a rotor (100) and a plurality of lanes (101A-101D) which are electrically separated from one another and which can be supplied with electrical current independently of one another in order to drive the rotor (100), wherein each of the lanes (101A-101D) comprises a winding system with at least one wire winding (D), and in each case a supply unit (11) for each lane (101A-101D) of the at least one electric motor (10), wherein at least one of the lanes (101A-101D) is simultaneously operated in a motor mode, wherein the lane (101A-101D) is supplied with electrical current via the corresponding supply unit (11) in order to convert electrical energy into kinetic energy of the rotor (100), and at least one of the lanes (101A-101D) is operated in a generator mode in which electrical current is supplied by the lane (101A-101D) via the corresponding supply unit (11), **characterized in that** a generator (13) functionally electrically connected to at least one of the lanes (101A-101D) via a further supply unit (11) is mechanically coupled to an internal combustion engine (14), wherein the further supply unit (11) is operated as a rectifier.

## Revendications

1. Système d'entraînement électrique (1A-1D), comprenant :
- un moteur électrique (10 ; 10A, 10B) doté d'un rotor (100) et d'une pluralité de voies (101A-101D) électriquement séparées les unes des autres et auxquelles un courant électrique peut être alimenté indépendamment les unes des autres pour entraîner le rotor (100), chacune des voies (101A-101D) comprenant un système d'enroulement doté d'au moins un enroulement de fil (D) ;
- une unité d'alimentation (11) respective pour chacune des voies (101A-101D) ; et
- un système de commande (12), qui est conçu pour simultanément faire fonctionner au moins l'une des voies (101A-101D) dans un mode moteur dans lequel un courant électrique est alimenté à la voie (101A, 101D) par l'intermédiaire de l'unité d'alimentation (11) correspondante afin de convertir l'énergie électrique en énergie cinétique du rotor (100), et faire fonctionner au moins l'une des voies (101A, 101D) dans un mode générateur dans lequel un courant électrique est alimenté au moyen de la voie (101A, 101D) par l'intermédiaire de l'unité d'alimentation (11) correspondante ;
**caractérisé en ce que**
un générateur (13) électriquement connecté de manière fonctionnelle à au moins l'une des voies (101A, 101D) par l'intermédiaire d'une unité d'alimentation supplémentaire (11) est mécaniquement couplé à un moteur à combustion interne (14), ladite unité d'alimentation supplémentaire (11) comprenant un redresseur (111).

2. Système d'entraînement électrique (1A-1D) selon la revendication 1, ledit rotor (100) étant couplé à une turbomachine (102), en particulier une hélice, un ventilateur ou un compresseur.

3. Système d'entraînement électrique (1A-1D) selon la revendication 2, ladite turbomachine (102) possédant des pales de rotor à angles d'attaque réglables, ledit système de commande (12) étant conçu pour régaler l'angle d'attaque des pales de rotor pendant le fonctionnement simultané du moteur et du générateur de sorte que la turbomachine (102) ne génère pas de propulsion.

4. Système d'entraînement électrique (1A-1D) selon l'une quelconque des revendications précédentes, chaque unité d'alimentation (11) comprenant un onduleur (110) et/ou pouvant fonctionner comme un onduleur, lesdites unités d'alimentation (11) étant chacune conçues pour convertir un courant continu en un courant alternatif triphasé et pour le fournir à la voie correspondante (101A-101D).

5. Système d'entraînement électrique (1A-1D) selon l'une quelconque des revendications précédentes, l'une ou chacune des unités d'alimentation (11) comprenant un redresseur (111) et/ou pouvant fonctionner comme un redresseur, l'une ou chacune des unités d'alimentation (11) étant chacune conçue pour convertir un courant alternatif triphasé provenant de la voie correspondante (101A-101D) en un courant continu.

6. Système d'entraînement électrique (1A-1D) selon la revendication 1, ledit générateur (13) comprenant une pluralité de voies (141A-141D) électriquement séparées les unes des autres.

7. Système d'entraînement électrique (1A-1D) selon l'une quelconque des revendications précédentes, comprenant en outre un moteur électrique supplémentaire (10B), doté d'un rotor (100) et d'une pluralité de voies (101A-101D) électriquement séparées les unes des autres et auxquelles un courant électrique peut être alimenté indépendamment les unes des autres pour entraîner le rotor (100).

8. Système d'entraînement électrique (1A-1D) selon la revendication 6 et la revendication 7, au moins une voie (101C, 101D) du moteur électrique (10A) étant électriquement connectée de manière fonctionnelle à au moins une voie (131A, 131B) du générateur (13) et au moins une voie (101C, 101D) du moteur électrique supplémentaire (10B) étant électriquement connectée de manière fonctionnelle à au moins une voie supplémentaire (131C, 131D) du générateur (13).

9. Système d'entraînement électrique (1A-1D) selon l'une quelconque des revendications précédentes, comprenant en outre un accumulateur d'énergie (15) électriquement connectée à au moins l'une des voies (101A-101D).

10. Système d'entraînement électrique (1A-1D) selon l'une quelconque des revendications précédentes, comprenant en outre une pluralité d'accumulateurs d'énergie (15), chacun électriquement connecté à au moins l'une des voies (101A-101D), l'énergie électrique pouvant être transmise de l'un des accumulateurs d'énergie (15) à un autre accumulateur d'énergie (15) par l'intermédiaire d'une voie (101A-101D) fonctionnant dans le mode moteur et d'une voie (101A-101D) fonctionnant dans le mode générateur.

11. Véhicule, en particulier aéronef (2), comprenant le système d'entraînement électrique (1A-1D) selon l'une quelconque des revendications précédentes.

12. Véhicule selon la revendication 11, au moins un accumulateur d'énergie (15) électriquement connecté à au moins l'une des voies (101A-101D) étant monté de manière interchangeable sur le véhicule par l'intermédiaire d'un connecteur et au moins un accumulateur d'énergie (15) électriquement connecté à au moins l'une des voies (101A-101D) étant monté de manière fixe sur le véhicule.

13. Véhicule selon la revendication 11 ou 12, ledit véhicule étant conçu sous la forme d'un aéronef (2) doté d'un fuselage (21) et d'ailes (22) et au moins un accumulateur d'énergie (15) électriquement connecté à au moins l'une des voies (101A-101D) étant monté sur ou dans le fuselage (21) et au moins un accumulateur d'énergie (15) électriquement connecté à au moins l'une des voies (101A-101D) étant monté sur ou dans l'une des ailes (22).

14. Procédé de fonctionnement d'un système d'entraînement électrique (1A-1D), en particulier selon l'une des revendications 1 à 10, comprenant un moteur électrique (10 ; 10A, 10B) doté d'un rotor (100) et d'une pluralité de voies (101A-101D) électriquement séparées les unes des autres et auxquelles un courant électrique peut être alimenté indépendamment les unes des autres pour entraîner le rotor (100), chacune des voies (101A-101D) comprenant un système d'enroulement doté d'au moins un enroulement de fil (D), et une unité d'alimentation (11) respective pour chaque voie (101A-101D) dudit au moins un moteur électrique (10), dans le même temps au moins l'une des voies (101A-101D) fonctionnant dans un mode moteur dans lequel un courant électrique est alimenté à la voie (101A, 101D) par l'intermédiaire de l'unité d'alimentation (11) correspondante afin de convertir l'énergie électrique en énergie cinétique du rotor (100), et au moins l'une des voies (101A, 101D) fonctionnant dans un mode générateur dans lequel un courant électrique est alimenté au moyen de la voie (101A, 101D) par l'intermédiaire de l'unité d'alimentation (11) correspondante, **caractérisé en ce qu'**un générateur (13) électriquement connecté de manière fonctionnelle à au moins l'une des voies (101A-101D) par l'intermédiaire d'une unité d'alimentation supplémentaire (11) est mécaniquement couplé à un moteur à combustion interne (14), ladite unité d'alimentation supplémentaire (11) fonctionnant comme un redresseur.
